# EUROPÄISCHE PATENTANMELDUNG

(11) **EP 1 372 007 A1**
(43) Veröffentlichungstag der Anmeldung: **17.12.2003**
(21) Anmeldenummer: 02360169.3
(22) Anmeldetag: 11.06.2002
(51) Int. Cl.: G02B 6/42

(54) **Koppelvorrichtung zur Ausrichtung eines optischen Wellenleiters**

(71) Anmelder: ALCATEL, 75008 Paris (FR)
(72) Erfinder: Luz, Gerhard, 74321 Bietigheim-Bissingen (DE)
(74) Vertreter: Rausch, Gabriele, Dr.

(57) **Zusammenfassung**

Die Wahl für die optische Koppelvorrichtung von einem Halter, der nur eine Stütze aufweist, ermöglicht diese optische Komponente kompakt zu halten. Dies ist Vorteilhafterweise erreicht indem die Stütze erfindungsgemäß das dehnbare Element umgibt. Somit bleibt der Träger der optischen Wellenleiters in der direkten Umgebung der Stütze bzw. der Stelle an der die optische Koppelvorrichtung auf der optischen Komponente befestigt sein soll. Damit wird die Ausrichtung des Endes des optischen Wellenleiters nicht von unvermeidbaren Krümmungen der optischen Komponenten beeinträchtigt. Die erfindungsgemäße Gestaltung der Stütze einer alternativen optischen Koppelvorrichtung mit einem beweglichen Arm als zusätzliche Verbindung zu dem gelenkartigen Steg zu einem Ende des Trägers des optischen Wellenleiters ermöglicht eine noch genauere Ausrichtung des Endes des optischen Wellenleiters zu erzielen. Die Betätigung dieses zusätzlichen Armes kann mit Hilfe einer in der Stütze eingebauten mikromechanischen Schraube oder durch plastische Verformung erfolgen.

## Beschreibung

Die Erfindung bezieht sich auf eine optische Koppelvorrichtung zur Ausrichtung eines in einem Halter getragenen optischen Wellenleiters. Der Halter ist aus einer Stütze zu einer Fläche gebildet, wobei letztere eine Endfläche enthält, zu der das Ende des optischen Wellenleiters anzukoppeln ist.

Die fortschreitende Entwicklung von optischen Komponenten wie Wellenleitergitter (PHASAR "phase array" oder AWG "array waveguide grating") bei denen eine Vielzahl von Ein-/Ausgänge über optische Wellenleiter gebildet sind und optische Signale mit Hilfe von Trägerwellenlängen übertragen werden, die immer mehr enger benachbart gewählt werden, führt zu einer Verschärfung der Kopplungsbedingungen bei der Schnittstelle der optischen Wellenleiter mit der optischen Komponente. Dabei müssen solche optischen Komponenten unter sehr unterschiedlichen Bedingungen so gut wie möglich funktionsfähig bleiben. Unter anderem müssen die Funktionsfähigkeiten der optischen Komponenten unabhängig von den großen Temperaturschwankungen bleiben, unter welchen sie ausgesetzt werden können. Optische Komponenten sind aus einem Träger gebildet, der z.B. durch solche Temperaturschwankungen oder auch durch die darauf gelegene Gewichtverteilung der unterschiedlichen Bauelementen sich genügend verformen kann, dass die optischen Ein-/Ausgänge davon berührt werden können. Im schlimmsten Fall können solche Verformungen zu einer so schlechten Ausrichtung von optischen Ein- Ausgängen führen, die zur merklichen Beeinträchtigung der Übertragung von optischen Signalen führen kann.

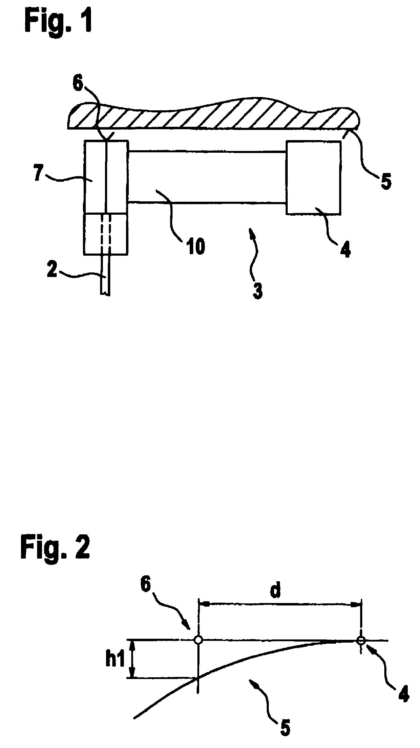

Zur Kompensierung von solchen Ausrichtungsfehlern bei den optischen Ein- Ausgängen werden spezifische Koppelvorrichtungen verwendet. Diese bestehen hauptsächlich aus einem Träger der jeweiligen optischen Ein- Ausgänge und mindestens einer Stütze zu der optischen Komponente. Der Träger ist mit der Stütze entsprechend verbunden, dass eine Änderung der Ausrichtung des Endes des getragenen optischen Wellenleiters zugelassen ist. In WO 98/13718 ist eine solche optische Koppelvorrichtung beschrieben. Die dort vorgestellte Verbindung (siehe die hiesige Fig. 1) zwischen dem Träger 7 und der Stütze 4 ist durch ein Ausdehnungselement 10 gebildet. Solche Ausdehnungselemente können z.B. aus einem piezoelektrischen Material hergestellt werden. In diesem Fall führt das kontrollierte Anlagen einer Spannung auf das Ausdehnungselement zur Ausrichtung des Endes des optischen Wellenleiters. Es ist sogar möglich, mit Hilfe einer solchen optischen Koppelvorrichtung die zentrale Wellenlänge eines Wellenleitergitters durch die Position des zu koppelnden Wellenleiters, der das Licht in die Einkoppelwellenleiter des Wellenleitergitters leitet, festzulegen. Auf diese Weise kann zentrale Wellenlänge des Wellenleitergitters durch die geometrische Positionierung der Endfläche 6 Wellenleiters 2 in Bezug auf die Endfläche 5 des Einkoppelwellenleiters dieses Wellenleitergitters die genau justiert werden.

Es ist sogar möglich, einen ab- oder durchdehnbaren Wellenleitergitter zu bilden. Mit Hilfe solcher Koppelvorrichtung kann eine bestimmte Ausgangswellenlänge des Wellenleitergitters ausgewählt werden, z.B. zentrale Wellenlänge zur Anpassung an den Erfordernisse des Betriebs, um beispielsweise die Alterung von Sendelasern zu kompensieren.

Die in WO 98/13718 offenbarte optische Koppelvorrichtung besteht aus einem Halter 3 mit einer Stütze 4 zu der optischen Komponente und einem Träger 7 für den optischen Wellenleiter 2, wobei der Träger 7 über das längenveränderliche Element 10 von der Stütze 4 gehalten ist. Dabei kann es zu Schwingungen oder Verbiegungen des längenveränderlichen Elements 10 und dabei zu einer temporären oder dauerhaften Dejustage des Endes der optischen Wellenleiter kommen, obwohl eine gewisse Kontrolle der Ausrichtung durch das längenveränderlichen Elements vorgesehen ist. Auf Fig. 2 ist eine schematische Abschätzung der Krümmung der optischen Komponente dargestellt. In der Tat, sind die verwendeten optischen Komponente aus Siliziumsubstrat und Glassschicht hergestellt nicht perfekt flach auf Grund der unterschiedlichen thermischen Ausdehnungseigenschaften von diesen Materialen. Die optische Komponente weist demnach eine Krümmung von ungefähr 15m Radius. Für einen Halter 3 mit einem längenveränderlichen Element 10, das 15mm lang ist und einen 2mm dicken Träger 7 ist d=17. Die Abweichung h1 der Endfläche 6 des vom Träger 7 gehaltenen optischen Wellenleiters 2 mit der Fläche 5 der optischen Komponente kann 7µm betragen. Dies führt zu einem nicht hinnehmbaren Verlust von bis zu 3dB.

In WO 01/07949 ist eine optische Koppelvorrichtung (sieh die hiesige Fig. 3) beschrieben, die aus zwei Stützen 4a, 4b besteht, zwischen denen ein längenveränderliches Element 10 eingebaut ist. Die Halterung des optischen Wellenleiters 2 ist von einem Träger 7¹ einerseits am längenveränderlichen Element 10 andererseits von der einen Stütze 4b gehalten. Dabei ist diese Stütze 4b gefedert gebildet. Somit sind Bewegung des längenveränderlichen Elements 10' bzw. des Trägers 7 des optischen Wellenleiters 2 in Längsrichtung des längenveränderlichen Elements 10', in der sich das längenveränderliche Element ausdehnt oder verkürzt, gestattet. Dagegen ist eine Bewegung des längenveränderlichen Elements 10' senkrecht zur Längsrichtung des längenveränderlichen Elements unterdrückt, wobei die gefederte Stütze 4b nahe bei der Fixierung der optischen Koppelvorrichtung an die Stelle der optischen Komponente gehalten ist, zu der das Ende der optischen Wellenleiter auszurichten ist. Diese Stütze 4b sollte entsprechend gestaltet werden, dass der optische Wellenleiter über diese gefederte Stütze möglichst nahe an der Fixierung gehalten wird. Das längenveränderliche Element 10', welches zwangsläufig weiterentfernt an der optischen Komponente befestigt ist, drückt den Träger 7' des optischen Wellenleiters 2 gegen die Stütze 4b und ermöglicht somit eine Relativbewegung des optischen Wellenleiters 7' zur optischen Komponente. Die gefederte Stütze 4b ist entsprechend gestaltet, dass eine Restbewegung senkrecht zur Ebene möglichst vollständig unterdrückt wird. Dies soll dazu führen, dass die Bewegung des optischen Wellenleiters 2 relativ zur optischen Komponenten sehr exakt parallel zur Fläche 5 der optischen Komponenten erfolgt und eine Dejustage senkrecht dazu praktisch nicht auftritt.

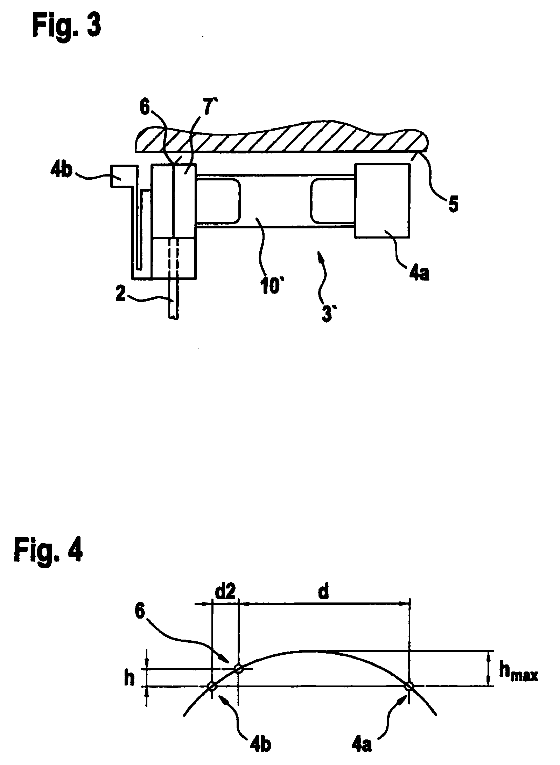

Die Verluste bei einer solchen optischen Koppelvorrichtung kann anhand der Fig. 4 abgeschätzt werden. Mit einem längenveränderlichen Element 10' von einer Länge von 15 mm und einem Träger 7' für den optischen Wellenleiter 2 von einem Durchmesser von 4 mm beträgt d insgesamt 17 mm. Bei einem Abstand des Trägers 7' zu der gefederten Stütze 4b von 1 mm beträgt der Abstand d₂ zwischen dem optischen Wellenleiter 2 und dieser gefederten Stütze 4b ungefähr 3 mm. Falls die optische Komponente einen Krümmungsradius von 15 m aufweist, wird die daraus resultierende Abweichung h 0,9 µm betragen. Im Vergleich zum vorherigen Bespiel auf Fig. 2 wird der Verlust nur noch 0,2 dB betragen.

Doch sind die Masse eines solchen optischen Halters 3' mit 2 Stützen 4a und 4b sehr groß. Die gesamte Länge beträgt ungefähr 25 bis 30 mm und kann somit größer sein als einige optische Komponenten, z.B. Wellenleitergitter mit einer geringeren Anzahl von Kanälen. Deshalb können solche Halter 3' nur für sehr große optische Komponente verwendet werden. Zudem ist der Aufbau eines solchen Halters durch die Größe erschwert, besonders in dem Fall, dass das Material der Stützen entsprechend der Ausdehnungseigenschaft der optischen Komponenten gewählt ist.

Der Erfindung liegt die Aufgabe zugrunde, eine optische Koppelvorrichtung zur Ausrichtung eines optischen Wellenleiters weiter zu entwickeln, die eine langzeitstabile Eigenschaft mit minimalen optischen Verlusten aufweisen, und für unterschiedliche optische Komponenten einzusetzen ist.

Die Aufgabe wird erfindungsgemäß durch eine optische Koppelvorrichtung nach der Lehre des Anspruches 1 gelöst.

Die Wahl für die optische Koppelvorrichtung von einem Halter, der nur eine Stütze aufweist, ermöglicht diese optische Komponente kompakt zu halten. Dabei werden die Nachteile, die bei dem Beispiel des Halters 3 auf Fig. 1 aus WO 98/13718 beseitigt, in dem die Stütze erfindungsgemäß das dehnbare Element umringt. Somit bleibt der Träger des optischen Wellenleiters in der direkten Umgebung der Stütze bzw. der Stelle an der die optische Koppelvorrichtung auf der optischen Komponente befestigt sein soll. Damit wird vorteilhafter Weise die Ausrichtung des Endes des optischen Wellenleiters nicht von unvermeidbaren Krümmungen der optischen Komponenten beeinträchtigt. Zudem ist die Bauweiser einen solchen optischen Koppelvorrichtung kompakt, was sie für sehr unterschiedliche optische Komponenten geeignet macht.

Die erfindungsgemäße Gestaltung der Stütze einer alternativen optischen Koppelvorrichtung mit einem beweglichen Arm als zusätzliche Verbindung zu dem gelenkartigen Steg zu einem Ende des Trägers des optischen Wellenleiters ermöglicht eine noch genauere Ausrichtung des Endes des optischen Wellenleiters zu erzielen. Die Betätigung dieses zusätzlichen Armes kann mit Hilfe einer in der Stütze eingebauten mikromechanischen Schraube oder durch plastische Verformung erfolgen.

Mehre Ausführungsbeispiele der Erfindung werden nun unter zu Hilfenahme der beiliegenden Zeichnungen weiter erläutert.

Es zeigen:
- Fig. 1: eine schematische Seitenansicht einer optischen Koppelvorrichtung aus dem Stand der Technik;
- Fig. 2: eine schematische Abschätzung des Einflusses der Krümmung der optischen Komponenten auf der optischen Koppelvorrichtung nach Fig. 1;
- Fig. 3: eine schematische Seitenansicht einer optischen Koppelvorrichtung aus dem Stand der Technik;
- Fig. 4: eine schematische Abschätzung des Einflusses des Krümmungsradius der optischen Komponenten auf der optischen Koppelvorrichtung nach Fig. 3;
- Fig. 5: eine schematische Seitenansicht eines ersten Ausführungsbeispiels einer erfindungsgemäßen optischen Koppelvorrichtung;
- Fig. 6: eine schematische Seitenansicht eines zweiten Ausführungsbeispiels einer erfindungsgemäßen optischen Komponenten;
- Fig. 7: eine schematische Seitenansicht eines dritten Ausführungsbeispiels einer erfindungsgemäßen optischen Komponenten;
- Fig. 8: eine schematische Seitenansicht eines vierten Ausführungsbeispiels einer erfindungsgemäßen optischen Komponenten.

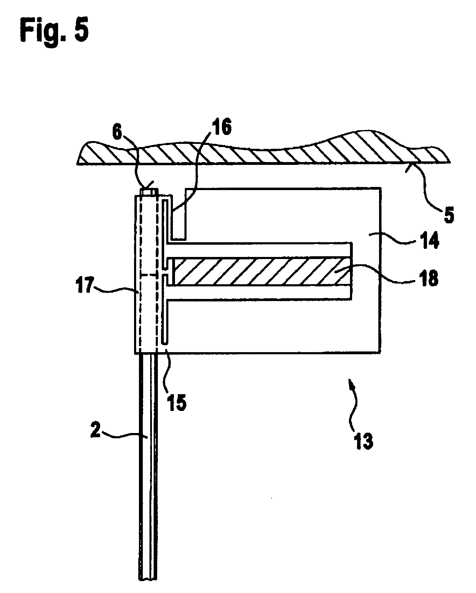

Auf Fig. 5 bis 8 sind vier erfindungsgemäße Ausführungsbeispiele einer optischen Koppelvorrichtung zur Ausrichtung eines Endes 6 eines optischen Wellenleiters 2 dargestellt. Sie sind aus einem Halter 13, 13', 23, 23' gebildet, der eine Stütze 14, 14', 24, 24' aufweist. Mit Hilfe dieser Stütze 14, 14', 24, 24' wird die optische Koppelvorrichtung auf einer optischen Komponenten befestigt, z.B. durch Verklebung der Stütze auf die Endfläche 5 der optischen Komponenten.

Der optische Wellenleiter 2 mit seinem Ende 6, das zu einer bestimmten Endfläche der optischen Komponente anzukoppeln ist, befindet sich in einem Träger 17, 17', 27 der mit der Stütze 14, 14', 24, 24' verbunden ist. Diese Verbindung zwischen dem Träger 17, 17', 27 und der Stütze 14, 14', 24, 24' ist von einem längenveränderlichen Element 18, 28 gebildet. Dieses längenveränderliche Element 18, 28 ist mindestens teilweise von der Stütze 14, 14', 24, 24' umringt, so dass die optische Koppelvorrichtung eine vorteilhafte kompakte Bauweise aufweist.

Solche optischen Koppelvorrichtungen werden an einer bestimmten Stelle einer Fläche 5 von einer optischen Komponenten aufgestellt, in der direkten Umgebung der einen Endfläche zu der das Ende 6 des optischen Wellenleiters 2 anzukoppeln ist. Diese Endfläche kann z.B. das Ende eines auf der optischen Komponenten strukturierten optischen Wellenleiters oder auch die Ankopplungsfläche einer opto-elektrischen Komponenten, die entweder auf der optischen Komponenten strukturiert oder aufgebracht wurde.

Der Träger 17, 17', 27 des optischen Wellenleiters 2 ist zu dem an einem Ende über einen gelenkartigen Steg 15, 15', 25 von der Stütze 14, 14', 24, 24' gehalten. Dieser gelenkartige Steg 15, 15', 25 weist einen Drehpunkt auf, der senkrecht zu der Fläche liegt, die das längenveränderliche Element 18, 28 und entsprechend die daraus resultierende Auslenkung des Träger 17, 17', 27 beinhaltet. Somit führt dieser gelenkartige Steg 15, 15', 25 zu einer Stabilisierung des Trägers 17, 17', 27 gegenüber seitlichen Vibrationen ohne eine Auslenkung des Trägers 17, 17', 27 einzuschränken.

Wie bei den vier Ausführungsbeispielen auf Fig. 5 bis 8 dargestellt, kann der Träger 17, 17', 27 zusätzlich noch an seinem zweiten Ende, d.h. um das Ende des auszurichtenden optischen Wellenleiters 2 über einen gefederten Arm 16, 16', 26 an der Stütze 14, 14', 24, 24' gehalten sein. Dieser gefederte Arm 16, 16', 26 erhöht die Stabilität des Trägers 17, 17', 27 gegenüber störenden Vibrationen. Die Federung dient dazu, den Träger in einer ursprünglichen Ausrichtung zu führen, falls das längenveränderliche Element 18, 28 durch Wirkung von Umgebungsparametern seine ursprüngliche Länge zurückgewinnt.

Es kann von besonderem Vorteil sein, die Stütze 14, 14', 24, 24' mit dem Steg 15, 15', 25, dem Arm 16, 16', 26 und dem Träger 17, 17', 27 aus einem monolithischen Block herzustellen. Neben den Vorteilen der Kosten bei der Herstellung von solchen Haltern, wird die Wahl eines monolithischen Blocks zu einem deutlich stabileren Halter führen. Hierfür kann es zweckdienlich sein, den Ausdehnungskoeffizient des monolithischen Blocks geringer als der des längenveränderlichen Elements 18, 28 auszuwählen. Demnach wird z.B. eine Änderung der Umgebungstemperatur einen stärkeren Einfluss auf das längenveränderliche Element 18, 28 als auf den monolithischen Block haben. Dies kombiniert mit der geometrischen Gestaltung der Stütze 14, 14', 24, 24' ähnlich eines großen U, dass das längenveränderliche Element 18, 28 umringt, ermöglicht eine große Spanne für die Ausrichtung des Endes 6 des optischen Wellenleiters 2 zu erzielten, ohne von Nachteilen zu sehr eingeschränkt zu sein, wie dies z.B. der Fall bei den oben zitierten Stand der Technik ist. Die Auslenkung des Trägers 17, 17', 27 zur Ausrichtung des Endes 6 des optischen Wellenleiters 2 ist besonders verstärkt durch die Wahl des längenveränderliche Elements 18, 28 in der Umgebung der Mitte des Trägers 17, 17', 27 wirken zu lassen. Dies ermöglicht, eine erfindungsgemäße optische Koppelvorrichtung einzusetzen, um die Ankopplung des Endes 6 des optischen Wellenleiters 2 mit der eine Endfläche der optischen Komponente vollkommen ein- oder auszuschalten, und somit eine Verwendung der optischen Koppelvorrichtung als optischen Schalter zu ermöglichen.

Es kann von Vorteil sein, sowohl den monolithischen Block als auch das längenveränderliche Element 18, 28 aus unterschiedlichen Metallen herzustellen, und somit letzteres mit Hilfe von Schweißtechnik an die Stütze 14, 14', 24, 24' und/oder den Träger 17, 17', 27 zu befestigen. Die Herstellung des monolithischen Blocks in einem solchen Material ist relativ leicht mit Hilfe von "wire erosion processing" in guter Qualität durchzuführen. Andere Materialien wie z.B. Silizium oder Pyrex können für den monolithischen Block verwendet werden. Sie sind zwar schwieriger herzustellen, aber haben den Vorteil stabiler bei einer Temperaturänderung wegen kleineren Ausdehnungskoeffizient zu sein. Das längenveränderliche Element als solches kann auch aus einem piezokeramischen Material hergestellt werden und ist dann über Verklebung an der Stütze 14 14', 24, 24' sowie dem Träger 17, 17', 27 befestigt. Die Wahl von piezokeramischem Material ist besonders zutreffend für eine als optischen Schalter dienende optische Koppelvorrichtung.

Auf Fig. 5 ist eine Seitenansicht eines erfindungsgemäßen Ausführungsbeispiels einer optischen Koppelvorrichtung dargestellt. Der Halter 13 wird über ein Bein der U-förmigen Stütze 14 auf die Fläche 5 der optischen Komponente aufgestellt und z.B. durch Verklebung befestigt. Seitlich zu der Stütze 14 ist der Träger 17 des optischen Wellenleiters 2 über den gelenkartigen Steg 15 und den gefederten Arm 16 an den zwei Enden der Stütze 14 verbunden angebracht. Zudem ist das längenveränderliche Element 18 in die U-förmige Stütze 14 zwischen den zwei Beinen entsprechend angebracht, dass es sich mit einem seiner zwei Enden auf die Verbindung der zwei Beine der U-förmigen Stütze 14 abstützt indem sie darauf befestigt ist. Das entgegengesetzte Ende des längenveränderlichen Element 18 stützt sich direkt auf den Träger 17. Somit ist das längenveränderliche Element 18 von der U-förmigen Stütze 14 umringt.

Die Abstützung des längenveränderlichen Elements 18 ungefähr auf die Mitte der Länge des Trägers 17 ermöglicht mehr als einen Faktor 2 bei der Bewegung des Endes 6 des optischen Wellenleiters 2 pro Einheit der Längenveränderung des Element 18 zu erzielen. Dies ermöglicht eine sehr große Auslenkung des Trägers 17 bei noch klein gehaltenen Maßen für die optische Koppelvorrichtung zu gewährleisten.

Somit kann bei gleicher Größe der Ausrichtung des Trägers 17 die ursprüngliche Länge des längenveränderlichen Elements 18 halbiert werden, was zu einer sehr kompakten Bauweise der optischen Koppelvorrichtungen führt. Z.B. kann die Gesamtlänge der optischen Koppelvorrichtung nur ungefähr 12,5 mm betragen, wenn ein längenveränderliches Element 18 aus Aluminium mit einer Länge von ungefähr 7,5 mm angewendet wird. Für ein längenveränderliches Element 18 aus Stahl mit einem kleineren Ausdehnungskoeffizient wird die Gesamtlänge der optischen Koppelvorrichtung ungefähr 17 mm betragen. Die Wahl von Stahl hat dennoch den Vorteil, dass das längenveränderliche Element 18 mit Hilfe von Schweißtechnik z.B. unter Laser an der Stütze 14 befestigt werden kann. Eine solche Befestigung kann Langzeit stabiler sein, als einer Verklebung.

Neben dem längenveränderlichen Element 18, 28 kann es von besonderem Vorteil sein, eine zusätzliche Möglichkeit zu haben, mit der die Auslenkung des Trägers 17 noch genauerer sich bestimmen lässt. Dies ist besonders von Wichtigkeit, bei der Einstellung einer zentralen Wellenlänge einer athermischen optischen Komponente oder Nullpunktfestsetzung. Zudem ist die Abstimmbarkeit für Wellenleitergittern mit Hilfe von thermischen Einflüssen in der Größenordnung von 30 pm pro Wellenlänge und µm-Einheit Verschiebung. Die Abstimmbarkeit mit Hilfe thermischen Einflüssen ist durch die Differenz der Temperatur zwischen der optischen Komponente und der optischen Koppelvorrichtung während der Ankopplung definiert.

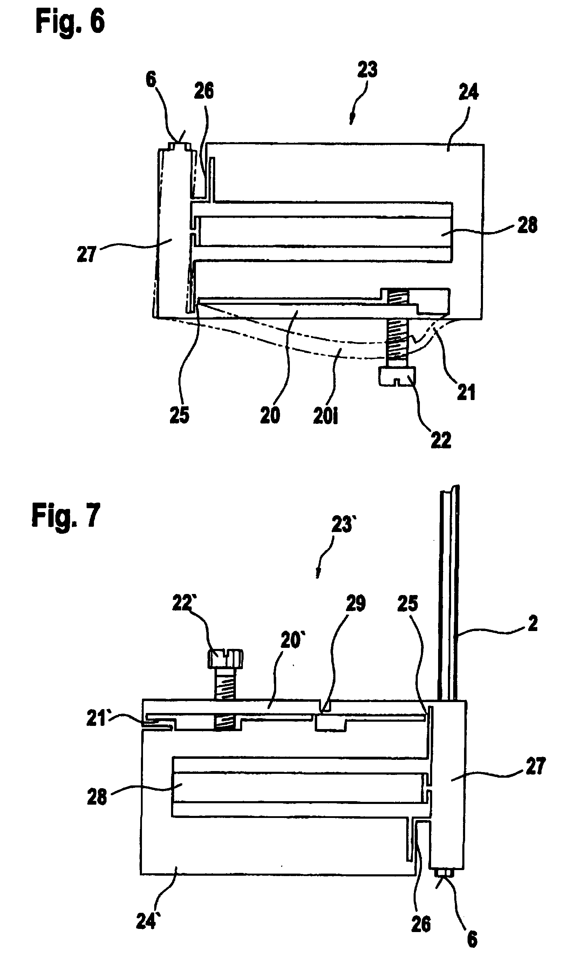

Auf Fig. 6 bis 8 sind drei Ausführungsbeispiele von optischen Koppelvorrichtungen dargestellt, bei denen zusätzlich zu dem längenveränderlichen Element 18, 28 die Stütze 14', 24, 24' mit dem gelenkartigen Steg 15', 25 über einen beweglichen Arm 12, 20, 20' verbunden ist. Die Bewegung des zusätzlichen Armes 12, 20, 20' führt zu einer noch genaueren Auslenkung des Trägers 17, 17', 27, als dies allein durch Betätigung des längenveränderlichen Elements 18, 28 zu erzielen ist.

Auf Fig. 6 ist eine Seitenansicht eines ersten Ausführungsbeispiels einer optischen Koppelvorrichtung mit dem zusätzlichen beweglichen Arm 20. Dieser Arm 20 ist Teil des die optische Komponente entferntesten Beins der U-förmig gebildeten Stütze 24, 24'. Bei diesem Ausführungsbeispiel ist die Betätigung dieses zusätzlichen beweglichen Arms 20 mit Hilfe einer in diesem Arm 20 eingesetzten mikromechanischen Schraube 22, die auf die Stütze 24, 24' sich abstützt, gegeben.

Die Betätigung dieser Schraube 22 führt zu einer Biegung nach außen des zusätzlichen beweglichen Arms 20 in der Position 20i. Diese Biegung nach außen ist insbesondere möglich, da der Arm 20 an dem den Träger 27 entferntesten Ende mit der Stütze 24, 24' über einen Steg 21 verbunden ist. Wie aus der Fig. 6 ersichtlich ist, führt die Biegung des Arms 20 nach außen über dem gelenkartigen Steg 25 zu einer zusätzlichen Auslenkung des Trägers 27. Diese zusätzliche Auslenkung des Trägers 27 ist unter anderem auch von dem gefederten Arm 26 am andere Bein der U-förmigen Stütze 24, 24' unterstützt. Damit kann vorteilhafter Weise das Ende 6 des optischen Wellenleiters 2 noch genauer zu der Endfläche der optischen Komponente zu der es anzukoppeln ist, ausgerichtet werden.

Auf Fig. 7 ist eine Seitenansicht eines zweiten Ausführungsbeispiels einer optischen Koppelvorrichtung, bei der die Stütze 24' einen zusätzlichen beweglichen Arm 20' aufweist. Wie in Ausführungsbeispiel auf Fig. 6 ist dieser Arm 20' mit einer mikromechanischen Schraube 22' versehen, die an der äußeren Seite des die optische Komponente entferntesten Beins der U-förmig gebildeten Stütze 24' sich abstützt. Die Betätigung dieser Schraube 22' führt zu einer Bewegung des Armes 20' nach außen, die wiederum über den Steg 25 sich auf den Träger 27 überträgt und zur Ausrichtung des Endes 6 des optischen Wellenleiters 2 dient.

Bei dem Ausführungsbeispiel auf Fig. 7 ist der zusätzliche Arm 20' zweiteilig geformt, wobei die zwei Teile über eine gelenkartige Verbindung 29 verbunden sind. Zudem ist der Arm 20' über einen im Ruhestand eingeklappten Steg 21' mit der Basis der U-förmig gebildeten Stütze 24' verbunden.

Der zweiteilig geformte Arm 20', der sogar mehrteilig sein könnte, hat den Vorteil, eine noch feinere Ausrichtung des Endes 6 des optischen Wellenleiters 2 zu gewährleisten. In der Tat dient der mehrteilig geformte zusätzliche Arm 20' als Untersetzung der durch Betätigung der mikromechanischen Schraube 22' nach außen erzeugte Bewegung (Auslenkung) auf die Auslenkung des Trägers 27 übertragen. Somit führt die Drehung der Schraube 22' um einen Gewindegang über den mehrteilig geformten Arm 20' zu einer Auslenkung des Trägers 27 des optischen Wellenleiters 2. Dabei ist die Größe der Auslenkung des Endes 6 des optischen Wellenleiters 2 dank der Untersetzung durch den mehrteilig geformten Arm 20' nur gleich ein Bruchteil des betätigten Gewindegangs.

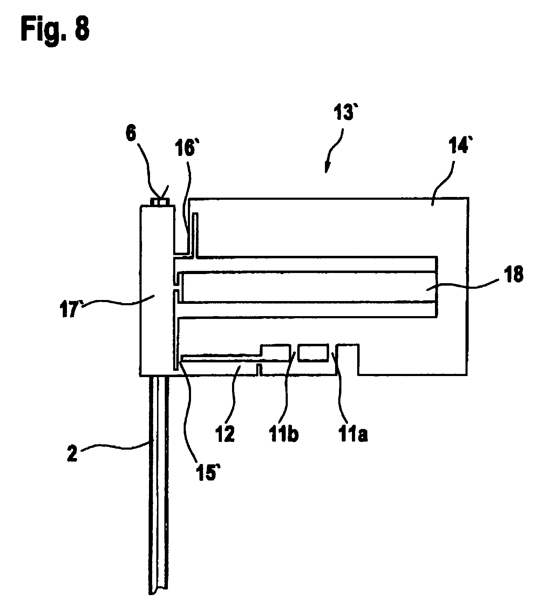

Auf Fig. 8 ist eine Seitenansicht einer alternativen optischen Koppelvorrichtung mit einem Halter 13', der eine U-förmig gebildete Stütze 14' aufweist, die wie bei den anderen Ausführungsbeispielen das längenveränderliche Element 18 zwischen ihre zwei Beine umringt. Zudem weist die Stütze 14' an dem die optische Komponente äußerstem Bein einen zusätzlichen beweglichen Arm 12 mehrteilig geformt - hier 2 - auf. Im Unterschied zu den Ausführungsbeispielen auf Fig. 6 und 7 wird die Betätigung dieses zusätzlichen Arms 12 nicht über eine Schraube erzielt. Vielmehr, ist der Arm mit dem einen Bein der U-förmig gebildeten Stütze 14' über mehrere Steg 11a, 11b sowie am Träger 17' über den gelenkartigen Steg 15' gehalten. In diesem Ausführungsbeispiel können die Stege 11a, 11b, die nur mit der Stütze 14', verbunden sind, destruktiv z.B. über einen Laser-Einfluss gebrochen werden, was zu einer Auslenkung des zusätzlichen Armes 12 führen soll. Diese Auslenkung wird sich ähnlich wie bei dem Ausführungsbeispiel auf Fig. 7 auf den Träger 17' übertragen und zu dessen Auslenkung führen. Somit kann auf einfache Art und Weise das Ende 6 des von dem Träger 17' gehaltenen optischen Wellenleiters 2 sehr genau ausgerichtet werden.

## Patentansprüche

1. Optische Koppelvorrichtung zur Ausrichtung eines Ende (6) eines optischen Wellenleiters (2) mit einem Halter (13, 13', 23, 23'), der aus einer Stütze (14, 14', 24, 24') zu einer Fläche (5), die eine Endfläche enthält, zu der das Ende (6) des optischen Wellenleiters (2) anzukoppeln ist, und einem einerseits an der Stütze (14, 14', 24, 24') befestigt und andererseits mit einem den optischen Wellenleiter (2) tragenden Träger (17, 17', 27) angekoppelten längenveränderlichen Element (18, 28) gebildet ist, **dadurch gekennzeichnet, dass** das längenveränderliche Element (18, 28) mindestens teilweise von der Stütze (14,14', 24,24') umringt ist.

2. Optische Koppelvorrichtung nach Anspruch 1, **dadurch gekennzeichnet, dass** der Träger (17, 17', 27) über einen gelenkartigen Steg (15, 15', 25) der Stütze (14, 14', 24, 24') gehalten ist, der (15, 15', 25) einen Drehpunkt aufweist um eine vom längenveränderlichen Element (18, 28) hervorgerufene Auslenkung des Trägers (17, 17', 27) zu ermöglichen.

3. Optische Koppelvorrichtung nach Anspruch 1, **dadurch gekennzeichnet, dass** der Träger (17, 17', 27) um das Ende des auszurichtenden optischen Wellenleiters (2) über einen gefederten Arm (16, 16', 26) der Stütze (14, 14', 24, 24') gehalten ist.

4. Optische Koppelvorrichtung nach Anspruch 1 oder 2, **dadurch gekennzeichnet, dass** die Stütze (14, 14', 24, 24') mit dem Steg (15, 15', 25), dem Arm (16, 16', 26) und dem Träger (17, 17', 27) aus einem monolithischen Block hergestellt sind.

5. Optische Koppelvorrichtung nach Anspruch 3, **dadurch gekennzeichnet, dass** der Ausdehnungskoeffizient des monolithischen Blocks geringer ist als der des längenveränderlichen Elements (18, 28).

6. Optische Koppelvorrichtung nach Anspruch 4, **dadurch gekennzeichnet, dass** sowohl der monolithische Block als auch das längenveränderliche Element (18, 28) aus Metal basieren und somit letzteres mit Hilfe von Schweißtechnik an die Stütze (14, 14', 24, 24') und/oder den Träger (17, 17', 27) befestigt ist.

7. Optische Koppelvorrichtung nach Anspruch 1, **dadurch gekennzeichnet, dass** das längenveränderliche Element (18, 28) aus einem Material hergestellt ist, das eine hinreichend große Auslenkung des Trägers (17, 17', 27) weg von der Stütze (14, 14', 24, 24') ermöglicht, um die Ankoppelung des Ende (6) des optischen Wellenleiters (2) vollkommen auszuschalten, und somit eine Verwendung der optischen Koppelvorrichtung als optischen Schalter zu ermöglichen.

8. Optische Koppelvorrichtung nach Anspruch 1, **dadurch gekennzeichnet, dass** das Material des längenveränderlichen Elements (18, 28) aus einem piezokeramischen Material besteht.

9. Optische Koppelvorrichtung nach Anspruch 2, **dadurch gekennzeichnet, dass** der gelenkartige Steg (15', 25) über einen zusätzlichen beweglichen Arm (12, 20, 20') mit der Stütze (14', 24, 24') verbunden ist, wobei die Bewegung des zusätzlichen Armes (12, 20, 20') eine noch genauere Auslenkung des Trägers (17, 17', 27) ermöglicht, als dies allein durch Betätigung des längenveränderlichen Elements (18,28) zu erzielen ist.

10. Optische Koppelvorrichtung nach Anspruch 9, **dadurch gekennzeichnet, dass** der zusätzliche Arm (12, 20') mehrteilig geformt ist, und entsprechend eine Untersetzung dessen Auslenkung auf die Auslenkung des Trägers (17', 27) führt.

11. Optische Koppelvorrichtung nach Anspruch 9, **dadurch gekennzeichnet, dass** die Bewegung des zusätzlichen Arms (20, 20') durch die Betätigung einer mit dem Arm (20, 20') gekoppelten Schraube (22, 22') gegeben ist.

12. Optische Koppelvorrichtung nach Anspruch 9, **dadurch gekennzeichnet, dass** die Bewegung des zusätzlichen Arms (12) durch irreversible Verformung teils (11a, 11b) des Arms (12) gegeben ist.
